# EUROPEAN PATENT APPLICATION

(11) **EP 4 265 848 A1**
(43) Date of publication of application: **25.10.2023**
(21) Application number: 22382377.4
(22) Date of filing: 22.04.2022
(51) Int. Cl.: E02D 27/42

(54) **FOUNDATION FOR A WIND TURBINE WITH FIBER REINFORCED CONCRETE**

(71) Applicant: Siemens Gamesa Renewable Energy Innovation & Technology S.L., 31621 Sarriguren (Navarra) (ES)
(72) Inventor: Alonso Gainza, Javier, 31621 Sarriguren, Navarra (ES)
(74) Representative: SGRE-Association

(57) **Abstract**

Foundation (10) for a wind turbine tower, the foundation (10) comprising a base slab (11), a pedestal (12) provided on the base slab (11), the pedestal (12) comprising attachment means for attaching the wind turbine tower; and a plurality of radial walls (13) extending from the pedestal (12) towards an outer edge (111) of the base slab (11), wherein at least one of the base slab (11), the pedestal (12) and at least one of the plurality of radial walls (13) is made of or comprises fiber reinforced concrete.

## Description

### Field of invention

The present invention relates to the technical field of foundations for wind turbines. The present invention relates in particular to a foundation for a wind turbine comprising a slab, a pedestal provided on the base slab and a plurality of radial walls extending from the pedestal towards an outer edge of the slab. The present invention further relates to method for constructing the aforementioned foundation for a wind turbine.

### Art Background

A known configuration of the foundation of a wind turbine tower comprises a base slab, a pedestal provided on the base slab and radial walls extending from the pedestal towards the edge of the base slab. Such configuration is particularly advantageous due to the reduced concrete volume required for the foundation.

In such configurations, reinforcing bars (rebars) and steel rods (also referred to bolt rods) are provided as a complex matrix in concrete to form reinforced concrete for the foundation. The placing of the rebars and bolt rods has often a high degree of complexity due to the peculiar form of the foundation comprising the base slab, the pedestal provided on the base slab and the radial walls extending from the pedestal towards the edge of the base slab. Rebars are however necessary for granting sufficient structural strength and resistance to deformation for improving the performance of the foundation.

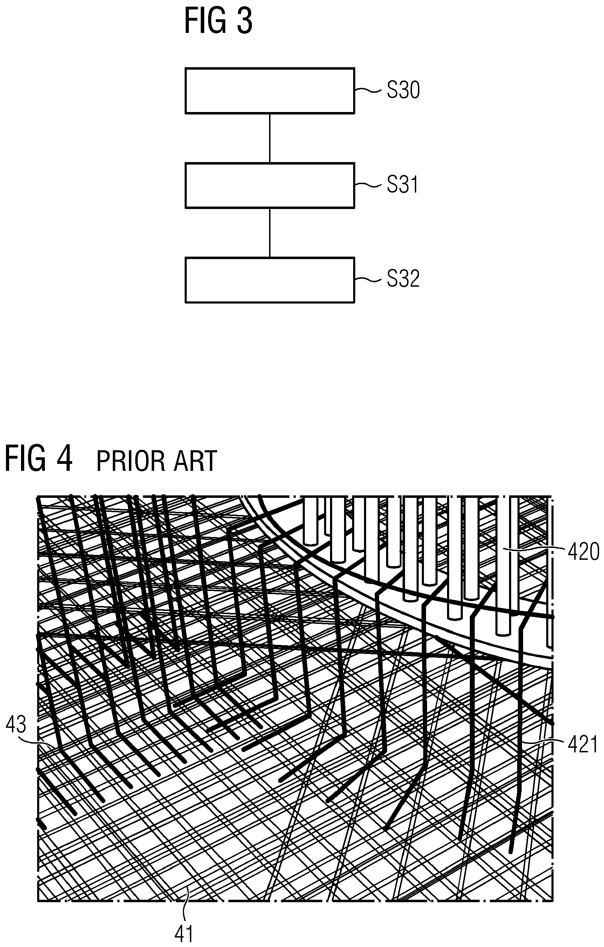

In **Figure** 4 a rebars mesh for a foundation for a wind turbine tower is shown. The rebars mesh comprises rebars 41 for the base slab, rebars 420, 421 for the bars cage going up to the pedestal and rebars 43 for a radial wall. All of these structural elements need to be intertwined with each other in a complex manner within the molding cage before pouring the concrete mixture. The placement of the elements shown in Figure 4 is often complex and time consuming and requires a precise design of each of the rebars elements, so that these intertwine correctly within the molding cage, also referred to as framework.

On the other hand, foundations made of or comprising fiber reinforced concrete are also known in the art. These foundations comprise a massive block of fiber reinforced concrete and are more expensive due to the higher price of this concrete and high volume needed.

There may therefore be the need of providing a foundation for a wind turbine tower having a slender configuration with a reduced volume and with a decreased complexity in the rebars mesh.

### Summary of the Invention

This need may be met by the subject matter according to the independent claims. Advantageous embodiments of the present invention are described by the dependent claims.

According to a first aspect of the present invention, a foundation for a wind turbine tower is provided. The foundation comprises a base slab, a pedestal provided on the base slab, the pedestal comprising attachment means for attaching the wind turbine tower, and a plurality of radial walls extending from the pedestal towards an outer edge of the base slab. At least one of the base slab, the pedestal and at least one radial wall is made of or comprises fiber reinforced concrete. In the context of the present document, a "slab" is a concrete block or disk whose extension in one dimension is significantly smaller than the extension in the other two dimensions. In other words, a slab is a thin concrete disk element. Typically, a slab has a thickness, constant or variable, along the dimension with smallest extension of 100 mm to 1000 mm.

In the context of the present document, a "pedestal" is a concrete element (socket) provided on the slab to which the wind turbine tower can be attached or anchored to. To this end, the pedestal is provided with attachment means, such as bolts, which engage with attachment means of the wind turbine tower, in order to attach or anchor the latter to the foundation.

In the context of the present document, a "radial wall", which may also be referred to as "ribbed wall" or "rib" is a concrete element extending from the pedestal towards an outer edge of the slab. The plurality of radial walls stabilizes the attachment of the wind turbine tower to the foundation and redistribute the load of the wind turbine comprising the weight of the wind turbine itself as well as external loads, such as from wind, coming through the tower and the soil in a more uniform way over the slab. The radial walls may extend from the pedestal up to the edge of the slab. Specifically, the radial walls extend along a radial direction. The radial direction is a direction perpendicular to a vertical axis of the foundation or of the pedestal.

According to the present document, "fiber reinforced concrete" (FRC) is a type of concrete in which (micro)fibers are admixed to the concrete mix to obtain a concrete with improved material qualities. For example, in the fiber reinforced concrete there may be no need of reinforcing bars (rebars), though the invention also comprises the case in which the fiber reinforced concrete also comprises rebars and/or steel rods.

The first aspect of the present invention is therefore directed at fabricating at least one of the base slab, the pedestal and at least one the radial walls by using fiber reinforced concrete. In this case, the rebar mesh, which is typical in reinforced concrete, can be, at least partially, simplified, as high resistance and high load capacities are granted by using fiber reinforced concrete.

Due to the simplified rebars mesh, the fabrication of the element made of or comprising fiber reinforced concrete is easier and faster, as there is no need for placing the rebars in a complex pattern for granting the material qualities required.

Also, the foundation will require a lower concrete volume and a lower amount of reinforcing steel if compared with reinforced concrete.

According to an embodiment, at least one of the base slab, the pedestal and at least one radial wall could be at least partially, preferably completely free of rebars and/or of steel reinforcing rods.

In this case, it is possible to produce at least one element of the foundation, such as at least of the radial walls, without the need of providing a rebars mesh in the molding shape of the element. The fabrication of the element is therefore further simplified.

It may also be the case, that at least one of the base slab, the pedestal and at least one radial walls is partially free of rebars. Partially free means, in this context, that the at least one of the base slab, the pedestal and one radial wall is made of or comprises fibers reinforced concrete while also comprises rebars. In this configuration, fewer rebars are needed, thus simplifying the fabrication and construction of the element.

It is also possible, that all elements of the foundations are free of rebars. In this case, all of the elements of the foundations are made of or comprise fiber reinforced concrete, in order to have a sufficiently high resistance and sufficient load capabilities.

In a further embodiment, it is possible, that some elements are free of rebars and are made of or comprise fiber reinforced concrete and some other elements are made of or comprise reinforced concrete It is for example possible, that the pedestal and/or the slab are made of or comprise ferroconcrete with a rebars mesh, while the plurality of the radial walls is free of rebars and are made of or comprise fiber reinforced concrete. According to this embodiment, it is therefore possible to avoid placing a rebars mesh in elements having a complex shape or needing a complex intertwining with other rebars meshes, thus further simplifying the structure of the foundation and its production.

According to an embodiment, the radial walls have a prismatic-triangular or prismatic-trapezoidal shape.

According to such embodiment, the radial walls provide a particularly stable structure with a high loading capacity.

According to an embodiment, the radial walls with a prismatic-triangular or prismatic-trapezoidal shape may have a void space between them and both the pedestal and the base slab.

In this way, it is possible to save material in the foundation without compromising its structural stability and, thanks to the fiber reinforced concrete making the use of rebars superfluous, it is possible to realize such complicated shapes for the radial walls without the need of designing a complex rebars mesh for them.

According to a further embodiment, the radial walls may have a constant thickness along their length.

According to one embodiment, the base slab has a circular or polygonal shape.

A base slab with a regular shape provides a better load distribution of the wind turbine tower on the foundation and a better anchorage of the wind turbine to the foundation.

The fiber reinforced concrete can comprise different types or fiber and/or microfibers for giving the resistance and the load capacity requested.

According to an embodiment, the fiber reinforced concrete comprises steel microfibers. Steel microfibers are particularly resistant to extreme loads. Furthermore, steel microfibers are responsible for a ductile tensile response and for tensile strain-hardening at low strain.

According to embodiment, the fiber reinforced concrete comprises polymeric microfibers. Polymeric microfibers are easy in producing and can be well integrated in the concrete structure.

The polymeric microfibers can be polyvinylalcohol (PVA) microfibers. PVA microfibers are responsible for a ductile tensile response and for tensile strain-hardening at low strain.

According to an embodiment, the fiber reinforced concrete comprises crushed recycled wind turbine blades. In this way, it is possible to recycle components of a wind tower, thus increasing the ecological footprint of the foundation. According to an embodiment, the fiber reinforced concrete comprises synthetic microfibers. Synthetic microfibers are made up of non-biodegradable polymers, such as nylon, polyester, rayon, polyethylene terephthalate, polypropylene, acrylic or spandex and they generally have diameter less than 5 mm. They provide both higher resistance and an improved ductility to the concrete.

According to an embodiment, the synthetic microfibers are extruded microfibers. Extruded microfibers may be produced by means of an extruder, thus allowing a high reproducibility of the microfibers.

According to an embodiment, the fiber reinforced concrete comprises glass microfibers.

According to an embodiment, the fiber reinforced concrete comprises fibers and/or microfibers having a density of at least 4 kg/m³. The higher the density of the microfibers is, the higher the resistance of the concrete and the capability of withstanding higher loads of the concrete are.

According to a second aspect of the invention, a method for constructing a foundation is provided. The method comprises a step of providing foundation comprising a base slab, a pedestal provided on the base slab, the pedestal comprising attachment means for attaching the wind turbine tower, and a plurality of radial walls extending from the pedestal towards an outer edge of the base slab. The method is characterized in that, at least one of the base slab, the pedestal and at least one radial wall is made of or comprises fiber reinforced concrete.

According to an embodiment of the second aspect, the method comprises, in the step of providing a foundation, a first substep of admixing concrete and fibers to obtain fiber reinforced concrete. In a second substep, the fiber reinforced concrete is poured in a cage defining the shape and dimensions of the foundation. In a third and final substep, the fiber reinforced concrete is cured.

According to this embodiment, any one of the base slab, the pedestal and at least one radial wall can be fabricated in such a way. Alternatively, the whole foundation can be realized monolithically according to this embodiment of the second aspect, thus allowing a simplified method for fabricating a foundation for a wind tower turbine.

According to an embodiment, the fiber reinforced concrete is obtained by admixing fibers and concrete at a construction site of the foundation. This is particularly advantageous, as it allows the concrete to stay dry up to shortly before the foundation is fabricated, thus simplifying the management of the fabricating process.

According to another embodiment, the fibers and the concrete are admixed in a workshop or during transportation from to a construction site.

According to one embodiment, at least one of the base slab, the pedestal and at least one of the radial walls is obtained by additive manufacturing of fiber reinforced concrete. According to such embodiment, the at least one component is fabricated by additive manufacturing of fiber reinforced concrete. An additive manufacturing method for the foundation or for single component of it is particularly advantageous, as it allows to realize complex shapes of the elements to be fabricated in a cost and time efficient manner.

It might also be possible, that more than one concreting phase (production run) is implemented. For example, in a first concreting phase the slab is produced and in a second concreting phase the radial walls and the pedestal are produced.

An example for additive manufacturing might be represented by 3D-printing.

It is noted, that the method according to the second aspect of the present invention may include any of the features disclosed in the foundation according to the first aspect of the invention and that, vice versa, the foundation according to the first aspect of the invention may include any of the features disclosed in the method according to the second aspect of the invention.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a perspective view of a foundation of a wind turbine according to a first aspect of the invention.
- Figure 2: shows an enlarged view of a fiber reinforced concrete piece.
- Figure 3: shows a diagram to illustrate a method according a second aspect of the present invention.
- Figure 4: shows a rebars mesh of a foundation of a wind turbine according to the state of the art.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

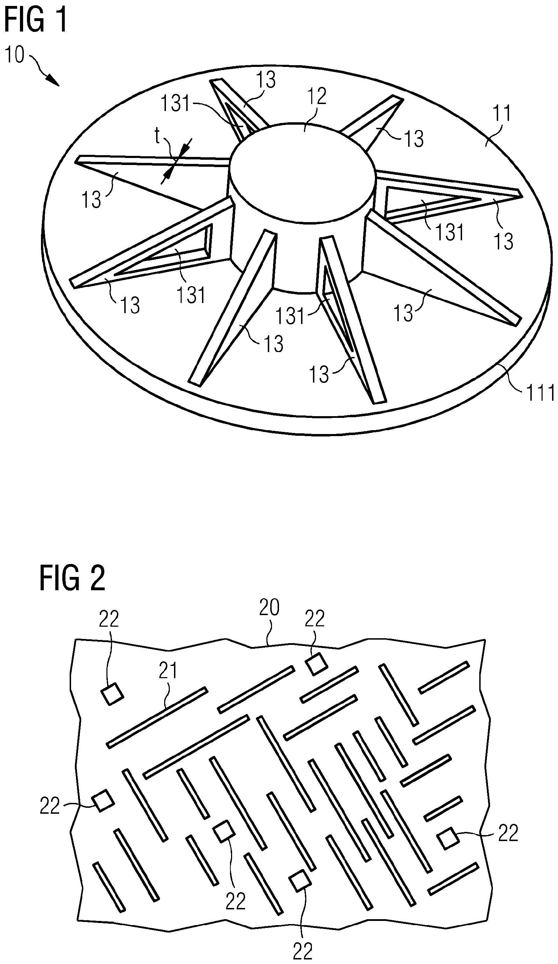

**Figure** 1 shows a perspective view of a foundation 10 having a circular shape.

The foundation 10 comprises a base slab 11, on which a pedestal 12 is placed. The pedestal 12 comprises attachment means, here not shown, for attaching or anchoring a wind turbine tower to the foundation 10. The pedestal 12 is placed in the middle of the base slab 11.

A plurality of radial walls 13 extends from the pedestal 12 towards the edge 111 of the base slab 11. In the embodiment according to **Figure 1****,** the radial walls 13 do not reach the edge 111. It may however be the case, that the radial walls 13 reach the edge 111.

The radial walls 13 have a prismatic-triangular shape. It may however also be the case, that the radial walls 13 have a prismatic-trapezoidal shape or that they have another shape. The thickness t of the radial walls is constant in the embodiment according to **Figure 1****,** although it may vary along the length of the radial wall 13. For example, it may be possible that the radial walls 13 are thicker at the joint with the pedestal 12 and thinner at the slab edge 111.

Every second radial wall 13 has a void space 131 a void space between the radial wall 13 self and both the pedestal 12 and the base slab 11.

In the embodiment according to **Figure 1****,** the foundation 10 is monolithic, meaning that it has been fabricated in only one production run, and it is completely made of fiber reinforced concrete, thus allowing complex forms, such as the radial walls 13 with the void 131, without the need of designing, fabricating and placing a complex rebars mesh, such as the one shown in **Figure 4****.** In other words, all of the elements of the foundation 10 according to **Figure** 1 have no rebars.

It might however also be the case that more than one concreting phase (production run) is implemented. For example, in a first concreting phase the slab 11 is produced and in a second concreting phase the radial walls 13 and the pedestal 12 are produced.

**Figure 2** shows an enlarged view of a fiber reinforced concrete piece 20 belonging to the foundation 10 according to **Figure 1****.** In the fiber reinforced concrete piece 20 there is a multitube of (micro)fibers 21, which are admixed to the concrete in order to give it resistance and strength. The fibers 21 can be of different kinds. For example, they can be steel microfibers, polymeric microfibers or synthetic microfibers and/or glass microfibers. They can be extruded microfibers.

The fibers 21 can all have the same orientation. However, it is more advantageous for the fibers 21 to have different orientation for guaranteeing a higher resistance and load capacity to the concrete piece 20.

In the fiber reinforced concrete piece 20 there are also pieces of crushed turbine blade 22, which are recycled after the turbine blades are no longer fit for being used in the wind turbine.

**Figure 3** shows a diagram to illustrate a method according a second aspect of the present invention.

In a first step S30, the fibers 21 and concrete are admixed to obtain a fiber reinforced concrete. The admixing can happen at the construction site of the foundation 10 or in a production workshop before transporting the concrete to the construction site of the foundation 10. It might however also be the case, the fibers 21 and the concrete are admixed during transportation to the construction or in a workshop prior to transportation to the construction site.

In a second step S31, the fiber reinforced concrete obtained in step S30 is poured in a cage defining the shape and dimensions of the foundation 10. Alternatively, in step S31 the fiber reinforced concrete obtained in step S30 is used by a 3D-printer for 3D-printing of the foundation 10.

In a third an final step S32, the poured or printed fiber reinforced concrete is cured to obtain the foundation 10.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Foundation (10) for a wind turbine tower, the foundation (10) comprising:
a base slab (11);
a pedestal (12) provided on the base slab (11), the pedestal (12) comprising attachment means for attaching the wind turbine tower; and
a plurality of radial walls (13) extending from the pedestal (12) towards an outer edge (111) of the base slab (11), wherein at least one of the base slab (11), the pedestal (12) and at least one radial wall (13) is made of or comprises fiber reinforced concrete.

2. Foundation (10) according to claim 1, wherein at least one of the base slab (11), the pedestal (12) and at least one radial wall (13) is at least partially, preferably completely free of rebars (41, 420, 421, 43).

3. Foundation (10) according to claim 1 or 2, wherein the radial walls (139 have a prismatic-triangular or prismatic-trapezoidal shape.

4. Foundation (10) according to any of the preceding claims, wherein the base slab (11) has a circular or polygonal shape.

5. Foundation (11) according to any of the preceding claims, wherein the fiber reinforced concrete comprises steel microfibers (21).

6. Foundation (10) according to any of the preceding claims, wherein the fiber reinforced concrete comprises polymeric microfibers (21).

7. Foundation (10) according to claim 6, wherein the polymeric microfibers are polyvinylalcohol (PVA) microfibers (21) .

8. Foundation (10) according to any of the preceding claims, wherein the fiber reinforced concrete comprises crushed recycled wind turbine blades (22).

9. Foundation (10) according to any of the preceding claims, wherein the fiber reinforced concrete comprises synthetic microfibers (21) and/or glass fibers (21).

10. Foundation (10) according to claim 9, wherein the synthetic microfibers (21) are extruded microfibers (21).

11. Foundation (10) according to any of the preceding claims, wherein the fiber reinforced concrete comprises fibers (21) and/or microfibers (21) having a density of at least 4 kg/m³.

12. Method for constructing a foundation (10) for a wind turbine tower, the method comprising:
providing foundation (10) comprising a base slab (11), a pedestal (12) provided on the base slab (11), the pedestal (11) comprising attachment means for attaching the wind turbine tower, and a plurality of radial walls (13) extending from the pedestal (12) towards an outer edge (111) of the base slab (11),
wherein at least one of the base slab (11), the pedestal (12) and at least one radial wall (13) is made of or comprises fiber reinforced concrete.

13. The method according to claim 12, wherein the method comprises:
admixing concrete and fibers (21) to obtain fiber reinforced concrete;
pouring the fiber reinforced concrete in a framework defining the shape and dimensions of at least one of the slab (11), the pedestal (12) and at least one radial wall (13) forming the foundation (10);
curing the fiber reinforced concrete.

14. Method according to claim 12 or 13, wherein the fiber reinforced concrete is obtained by admixing fibers (21) and concrete at a workshop, during transportation or at a construction site of the foundation (10).

15. Method according to claim 12 or 14, wherein at least one of the base slab (11), the pedestal (12) and at least one radial wall (13) is obtained by additive manufacturing of fiber reinforced concrete.
